# EUROPÄISCHE PATENTSCHRIFT

(11) **EP 1 213 510 B1**
(45) Veröffentlichungstag und Bekanntmachung des Hinweises auf die Patenterteilung: **04.07.2007**
(21) Anmeldenummer: 00126659.2
(22) Anmeldetag: 05.12.2000
(51) Int. Cl.: F16H 59/08, B60W 30/14

(54) **Steuereinrichtung für den Verbrennungsmotor und das automatische Getriebe eines Kraftfahrzeugs**
Selector lever control device for vehicle engine and gearbox
Sélecteur des vitesses et appareil de commande pour moteur à combustion dans un véhicule

(43) Veröffentlichungstag der Anmeldung: 12.06.2002
(73) Patentinhaber: Ford Global Technologies, LLC, Dearborn, MI 48126 (US)
(72) Erfinder: Quast, Jörg-Rainer, 50858 Köln (DE); Kniesburges, Stefan, 50259 Pulheim (DE)
(74) Vertreter: Bonsmann, Manfred

(56) Entgegenhaltungen:
- EP-A- 0 469 731
- EP-A- 0 607 655
- EP-A- 0 875 698
- DE-A- 19 919 457
- FR-A- 2 715 613
- US-A- 5 393 277
- US-A- 5 545 108

## Beschreibung

Die Erfindung betrifft eine Steuereinrichtung für den Verbrennungsmotor und das automatische Getriebe eines Kraftfahrzeugs, enthaltend einen Tempomaten sowie eine Eingabevorrichtung mit Bedienelementen, welche im Getriebe-Modus der Eingabevorrichtung eine Eingabe von Befehlen an die Getriebesteuerung erlauben.

Eine Steuereinrichtung der eingangs genannten Art ist aus der DE 691 00 712 T2 bekannt. Die Steuereinrichtung befindet sich in einem Kraftfahrzeug, das einen Verbrennungsmotor und ein an den Verbrennungsmotor gekoppeltes automatisches Getriebe aufweist. Das automatische Getriebe wird dabei in bekannter Weise von der Steuereinrichtung betätigt, das heißt in Abhängigkeit von Betriebsparametern des Kraftfahrzeugs zwischen verschiedenen Übersetzungsverhältnissen umgeschaltet. Insbesondere findet die Umschaltung zwischen zwei Gängen gemäß vorgegebenen Kennlinien in Abhängigkeit von der Motordrehzahl und der Kraftstoffzufuhr zum Motor statt.

Weiterhin enthält die bekannte Steuereinrichtung eine Eingabevorrichtung in Form eines Schalthebels zur Eingabe von Bedienungsbefehlen durch den Fahrer. Die Eingabevorrichtung befindet sich dabei stets in einem "Getriebe-Modus", in welchem die eingestellten Positionen des Schalthebels als Kommandos für die Getriebesteuerung interpretiert werden. Mit dem Schalthebel lassen sich insbesondere die Betriebsarten "Vorwärtsfahrt" (D), "Neutralposition" beziehungsweise "Leerlauf" (N) und "Rückwärtsfahrt" (R) einstellen.

Des weiteren weist die Steuereinrichtung der DE 691 00 712 T2 einen sogenannten Tempomaten auf, das heißt eine Einrichtung zur automatischen Regelung der Reisegeschwindigkeit ("cruise control"). Über einen derartigen Tempomaten kann eine gewünschte Reisegeschwindigkeit vorgegeben werden, welche dann vom Fahrzeug automatisch eingehalten wird, ohne dass weitere Bedienvorgänge des Fahrers notwendig wären. Der Fahrer behält jedoch die Möglichkeit, durch Betätigung des Gaspedals oder der Bremse die Vorgaben des Tempomats zu übersteuern und somit jederzeit in das Fahrgeschehen eingreifen zu können.

Die aus der DE 691 00 712 T2 bekannte Steuereinrichtung erfasst bei eingeschaltetem Tempomaten bestimmte Betriebsparameter des Fahrzeugs und deren zeitliche Änderung, um hieraus zu erkennen, ob das Fahrzeug zum Beispiel bei einer Bergfahrt erhöhten Leistungsanforderungen unterliegt. In diesem Falle wird die Steuereinrichtung für das automatische Getriebe in die sogenannte "kick-down"-Betriebsart umgeschaltet, welche normalerweise (bei ausgeschaltetem Tempomaten) nur vom Fahrer durch vollständiges Durchtreten des Gaspedals eingeschaltet werden kann. In dieser "kick-down"-Betriebsart werden zur Leistungssteigerung die für einen Gangwechsel vorgegebenen Motordrehzahlen erhöht (inkrementiert), so dass der Motor insgesamt hochtouriger betrieben wird.

Bei den bekannten Steuereinrichtungen sind die entsprechenden Steuermodule für das automatische Getriebe und für den Tempomaten voneinander getrennt und über jeweils eigene Bedienelemente zu betätigen. Dies führt zu einer höheren Anzahl von Bedienelementen, die vom Fahrer zu betätigen sind, und damit zu einer höheren Komplexität der Fahrzeugsteuerung, einem vermehrten Platzbedarf im Instrumentenbereich des Fahrzeugs sowie nicht zuletzt zu höheren Herstellungskosten für das Fahrzeug.

Aus EP-A-0 875 698 A1 ist ein Schaltknauf eines Gangschalt/Gangwählhebels eines Kraftfahrzeuges bekannt, welcher auf einer einzigen Seite des Schaltknaufs eine erste Gruppe von Schaltern, die dazu dienen, einen Tempomat zu betätigen, eine zweite Gruppe von Schaltern, um das Aktivierungsmaß einer Motorbremse zu steuern, und einen Übersetzungsbereichsschalter aufweist, der dazu dient, ein Getriebeübersetzungsverhältnis zu modifizieren. Auch bei dieser Vorrichtung sind somit separate Schalter für den Übersetzungsbereich des automatischen Getriebes einerseits und für den Tempomaten andererseits vorgesehen.

Vor diesem Hintergrund war es Aufgabe der vorliegenden Erfindung, eine Steuereinrichtung der eingangs genannten Art kostengünstiger, kompakter und einfacher bedienbar auszugestalten.

Diese Aufgabe wird durch eine Steuereinrichtung mit den Merkmalen des Anspruchs 1 gelöst. Vorteilhafte Ausgestaltungen sind in den Unteransprüchen enthalten.

Die Steuereinrichtung dient der Steuerung des Verbrennungsmotors und des daran gekoppelten automatischen Getriebes in einem Kraftfahrzeug. Sie enthält einen Tempomaten, das heißt eine automatische Geschwindigkeitsregelung, sowie eine Eingabevorrichtung mit Bedienelementen, welche im "Getriebe-Modus" der Eingabevorrichtung eine Einstellung der Getriebesteuerung bzw. die Eingabe von Befehlen hierfür erlauben. Die Steuereinrichtung ist dadurch gekennzeichnet, dass ihre Eingabevorrichtung einen Tempomat-Modus annehmen kann, in welchem die Betätigung mindestens eines der Bedienelemente nicht mehr als Befehl für die Getriebesteuerung, sondern als Befehl für den Tempomaten interpretiert wird, so dass dieses Bedienelement die Eingabe von Befehlen an den Tempomaten erlaubt.

Im Gegensatz zu bekannten Steuereinrichtungen ist die erfindungsgemäße Steuereinrichtung somit nicht in zwei separate und voneinander unabhängige Module aufgeteilt, wobei das eine Modul ausschließlich der Getriebesteuerung und das andere Modul ausschließlich der Geschwindigkeitsregelung (Tempomat) dient. Vielmehr werden die beiden Steuerungsaufgaben zumindest bezüglich der Eingabevorrichtung kombiniert, welche die Benutzerschnittstelle der Steuereinrichtung darstellt. Dies geschieht dadurch, dass die Eingabevorrichtung neben dem Getriebe-Modus auch noch einen zweiten Betriebsmodus, den "Tempomat-Modus" annehmen kann, in welchem die Betätigung mindestens eines der Bedienelemente nicht mehr als Kommando für die Getriebesteuerung, sondern als Kommando für den Tempomaten interpretiert wird. Über das Bedienelement doppelter Funktion kann zum Beispiel die Aktivität des Tempomaten ein- oder ausgeschaltet oder die Sollgeschwindigkeit vorgegeben werden.

Durch diese Doppelfunktion mindestens eines Bedienelementes und der Eingabevorrichtung kann zum einen eine Vereinfachung der Handhabung der Steuereinrichtung erzielt werden, da die Anzahl der Bedienelemente verkleinert und damit die Gefahr von Fehlbedienungen verringert wird. Insbesondere bei an einem Lenkrad angeordneten Eingabevorrichtungen ist eine derartige Minimierung der Anzahl der Bedienelemente besonders wünschenswert. Zum anderen wird auch eine Platz- und Bauteilersparnis erzielt, wobei letztere wiederum zu geringeren Herstellungskosten der Steuereinrichtung führt.

Gemäß einer Ausführungsform der Steuereinrichtung gehört zu den Bedienelementen ein Eingabeelement, welches im Folgenden vereinfacht als "Schalter" bezeichnet wird, das der Einstellung des Betriebsart "Vorwärtsfahrt" für die Getriebesteuerung dient. In der Betriebsart der Vorwärtsfahrt werden in bekannter Weise die Vorwärtsgänge des Getriebes je nach den Betriebsbedingungen des Fahrzeugs automatisch gewechselt. Die Eingabevorrichtung ist ferner so eingerichtet, dass sie durch Betätigung des Schalters für Vorwärtsfahrt zwischen dem Getriebe-Modus in der Betriebsart "Vorwärtsfahrt" und dem Tempomat-Modus hin- und her geschaltet werden kann. Dem Schalter für Vorwärtsfahrt kommt somit die zusätzliche Funktion zu, die Eingabevorrichtung zwischen den genannten Modi umzuschalten. Durch die zusätzliche Funktion dieses Schalters kann ein gesonderter Schalter für die Umschaltung zwischen Getriebe- und Tempomat-Modus eingespart werden. Weiterhin bietet sich der Vorwärtsfahrt-Schalter besonders an, da der Tempomat-Modus stets nur in der Betriebsart "Vorwärtsfahrt" der Getriebesteuerung benötigt wird und der Schalter für Vorwärtsfahrt im Tempomat-Modus üblicherweise funktionslos ist. Dieser Schalter wird lediglich dafür benötigt, um aus anderen Betriebsarten wie zum Beispiel der Neutralposition oder der Rückwärtsfahrt in die Betriebsart Vorwärtsfahrt umzuschalten.

Gemäß einer anderen vorteilhaften Ausgestaltung der Erfindung gehören zu den Bedienelementen der Eingabevorrichtung Eingabemittel zur Größeneinstellung, deren Betätigung im Getriebe-Modus der Eingabevorrichtung einen Gangwechsel und im Tempomat-Modus der Eingabevorrichtung eine Veränderung der Sollgeschwindigkeit bewirkt. Mit den Eingabemitteln zur Grö-ßeneinstellung kann der Wert einer Größe eingestellt werden, die sich in Stufen oder kontinuierlich ändern kann. Im Getriebe-Modus ist diese Größe insbesondere die (diskrete) Stufe des eingelegten Ganges, also der Wert 1, 2, 3, etc. Im Tempomat-Modus ist die Größe dagegen die Sollgeschwindigkeit, welche vom Tempomaten eingehalten werden soll.

Die Eingabemittel zur Größeneinstellung können insbesondere zwei Taster sein, wobei der eine Taster einer inkrementellen Erhöhung und der andere Taster einer dekrementellen Verringerung der zugrundeliegenden Größe dient. So kann der Inkrementierungs-Taster im Getriebe-Modus das Hochschalten um eine Gangstufe und im Tempomat-Modus die Erhöhung der Sollgeschwindigkeit um eine vorgegebene Differenz oder einen vorgegebenen Prozentsatz bewirken. Entsprechend kann der Dekrementierungs-Taster im Getriebe-Modus das Herunterschalten um eine Gangstufe und im Tempomat-Modus die Verringerung der Sollgeschwindigkeit um eine vorgegebene Differenz oder einen vorgegebenen Prozentsatz bewirken.

Die Eingabevorrichtung ist ferner vorzugsweise so ausgestaltet, dass sie bei Betätigung der Kraftfahrzeugbremse von dem Tempomat-Modus in den Getriebe-Modus übergeht, sofern sie sich anfänglich im Tempomat-Modus befand. Diese Ausgestaltung berücksichtigt, dass nach Betätigung der Bremse eine erhöhte Wahrscheinlichkeit dafür besteht, dass der Fahrer die Eingabevorrichtung zur Bedienung der Getriebesteuerung verwenden will. Zum Beispiel wird der Fahrer regelmäßig nach einem Anhalten des Kraftfahrzeugs die Getriebesteuerung in die Betriebsart der Neutralposition bringen wollen.

Vorzugsweise ist die Eingabevorrichtung dabei so ausgestaltet, dass der geschilderte automatische Übergang vom Tempomat-Modus in den Getriebe-Modus bei Betätigung der Bremse eine Konfigurationseinstellung der Steuereinrichtung darstellt, welche vom Fahrer wahlweise ein- oder ausgeschaltet werden kann. In ähnlicher Weise kann eine Betätigung des Gaspedals einen Übergang vom Tempomat-Modus in den Getriebe-Modus bewirken. Auch dieser automatische Übergang kann vorzugsweise als vom Fahrer wählbare Konfiguration der Steuereinrichtung ausgebildet sein.

Es sei darauf hingewiesen, dass der Übergang vom Tempomat-Modus in den Getriebe-Modus der Eingabevorrichtung (oder umgekehrt) nicht damit gleichzusetzen ist, dass die Aktivität des Tempomats beendet (begonnen) wird. Wie aus dem Stand der Technik bekannt ist, lässt sich vielmehr die automatische Steuerung des Tempomats bei Bedarf durch eine Betätigung der Bremse und/oder des Gaspedals vom Fahrer übersteuern, wobei nach Rücknahme dieser Übersteuerung die Kontrolle wieder auf den Tempomaten übergeht.

Zu den Bedienelementen der Eingabevorrichtung kann insbesondere ein Schalter für die Rückwärtsfahrt sowie ein Schalter für die Neutralposition des Getriebes gehören. Dabei ist die Eingabevorrichtung vorzugsweise so ausgestaltet, dass im Tempomat-Modus die Betätigung des Schalters für Rückwärtsfahrt keine Auswirkung hat. Alternativ kann über diesen Schalter aber auch z.B. die Aktivität des Tempomaten ein- oder ausgeschaltet werden. Die Betätigung des Schalters für die Neutralposition kann im Tempomat-Modus dieselbe Funktion haben wie im Getriebe-Modus, das heißt den Übergang des Getriebes in den Leerlauf bewirken.

Gemäß einer Weiterbildung enthält die Steuereinrichtung eine Anzeigevorrichtung, auf der ein Hinweis auf den Tempomat-Modus dargestellt wird, wenn sich die Eingabevorrichtung im Tempomat-Modus befindet. Anhand der Anzeigevorrichtung hat der Fahrer somit jederzeit die Information darüber, ob sich die Eingabevorrichtung im Tempomat-Modus befindet oder nicht (das heißt im Getriebe-Modus).

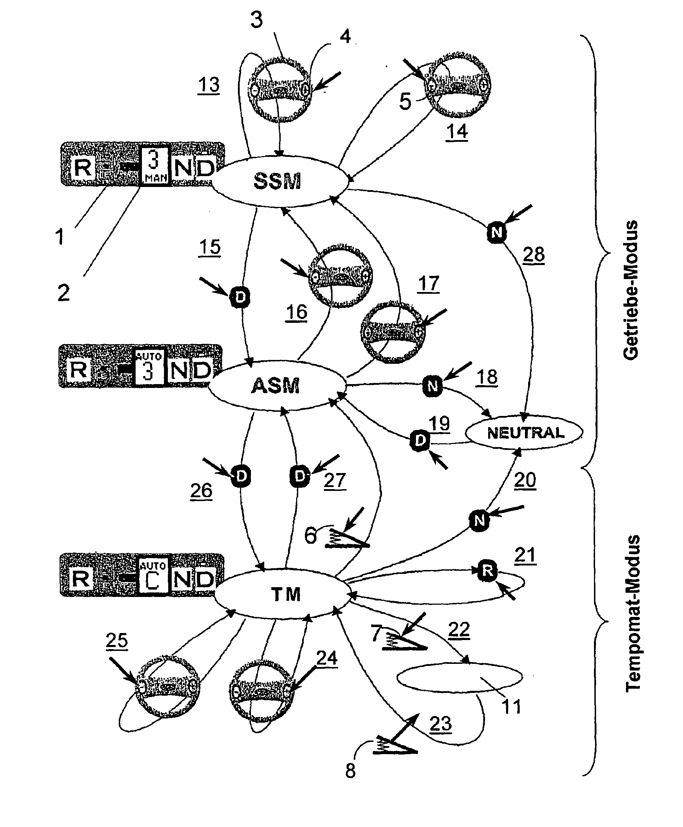

Im Folgenden wird die Erfindung mit Hilfe der Figur beispielhaft erläutert.

Die einzige Figur veranschaulicht die Übergänge zwischen den zwei verschiedenen Betriebsmodi und den Betriebsarten (Unterzustände der Betriebsmodi) für eine erfindungsgemäße Steuereinrichtung.

Die Steuereinrichtung für das automatische Getriebe eines Kraftfahrzeugs (nicht dargestellt) und den Tempomaten des Kraftfahrzeugs weist eine Eingabevorrichtung 1 auf, die als Schnittstelle zum Benutzer, das heißt dem Fahrer des Kraftfahrzeugs, dient. Die Eingabevorrichtung 1 weist verschiedene in Form von Tastern oder Schaltern ausgebildete Bedienelemente "R", "N" und "D" auf, die in einem gemeinsamen Bereich der Bedienkonsole angeordnet sind. Weiterhin gehören zu den Bedienelementen ein Inkrementierungs-Taster 4 ("+") sowie ein Dekrementierungs-Taster 5 ("-"). Die Taster 4 und 5 sind vorzugsweise an einem Lenkrad 3 des Kraftfahrzeugs angeordnet.

Weiterhin ist auf der Konsole der Eingabevorrichtung 1 eine Anzeigevorrichtung 2 vorgesehen, die zum Beispiel als Flüssigkristallanzeige (LCD) oder dergleichen ausgestaltet sein kann.

Die Funktionsweise der Eingabevorrichtung 1 wird nachfolgend unter Bezug auf die in der Figur durch Pfeile dargestellten Zustandsübergänge erläutert. An jedem der Pfeile ist dabei jeweils durch einen kurzen Pfeil angedeutet, welches Bedienelement zu betätigen ist, um den durch den Pfeil symbolisierten Zustandsübergang zu bewirken.

Den Ausgangspunkt der Funktionsbeschreibung bildet der in der Mitte dargestellte Zustand "ASM" der Eingabevorrichtung im Getriebe-Modus mit der Betriebsart "Vorwärtsfahrt: Automatisches Schalten". In dieser Betriebsart schaltet die Getriebesteuerung zwischen den verfügbaren Vorwärtsgängen des Getriebes automatisch um. Diese Automatikfunktion wird im Display 2 durch die Buchstaben "AUTO" symbolisiert. Ferner wird im Display 2 die momentan eingelegte Gangstufe - im Beispiel "3" - dargestellt.

Folgende Tastenbetätigungen sind im geschilderten Ausgangszustand ASM möglich:
- Betätigung des Tasters "N", was zu einem Übergang 18 in die Neutralposition (Leerlauf, "NEUTRAL") des Getriebes führt;
- Betätigung des Inkrementierungs-Tasters 4 am Lenkrad 3, was einen Übergang 17 in den Zustand "SSM" für einen manuellen Betrieb bewirkt;
- Betätigung des Dekrementierungs-Tasters 5 am Lenkrad 3, was ebenfalls einen Übergang 16 in den Zustand "SSM" in einem manuellen Betrieb bewirkt.

Aus der Neutralposition ("NEUTRAL") führt eine Betätigung des Tasters "D" für Vorwärtsfahrt zurück in den Zustand "ASM" (Übergang 19).

In der manuellen Betriebsart "SSM" nimmt der Fahrer von Hand Einfluss auf das Einlegen der Gänge. Diese Betriebsart wird im Display 2 durch die Buchstaben "MAN" symbolisiert. Ferner wird im Display 2 die jeweils eingelegte Gangstufe dargestellt.

Eine Erhöhung der Gangstufe um Eins 13 wird in der Betriebsart "SSM" durch eine einfache Betätigung des Inkrementierungs-Tasters 4 bewirkt (Übergang 13), eine Verminderung der Gangstufe um Eins 14 durch eine einfache Betätigung des Dekrementierungs-Tasters 5 (Übergang 14). Dabei verbleibt die Eingabevorrichtung jeweils in der Betriebsart "SSM".

Durch eine Betätigung des Schalters "D" für Vorwärtsfahrt wird ein Rücksprung 15 aus dem Zustand "SSM" in den Modus mit automatischer Getriebesteuerung "ASM" bewirkt. Des weiteren kann die manuelle Getriebesteuerung "SSM" durch eine Betätigung des Tasters "N" mit einem Sprung 28 in die Neutralposition ("NEUTRAL") verlassen werden.

Darüber hinaus existiert noch eine Betriebsart für Rückwärtsfahrt R, auf deren detailliertere Beschreibung jedoch verzichtet wird.

Die bis hierher dargestellte Funktionsweise der Steuereinrichtung und der Eingabevorrichtung 1 entspricht im Wesentlichen der bekannten Funktion einer Getriebesteuerung, die sich ausschließlich im "Getriebe-Modus" abspielt. Die erfindungsgemäße Weiterbildung der Eingabevorrichtung 1 erfolgt dadurch, dass ein weiterer Modus, nämlich der "Tempomat-Modus" (TM) vorgesehen ist. Dieser Tempomat-Modus wird angenommen, wenn ausgehend vom Getriebe-Modus und der Betriebsart "ASM" für automatisches Schalten der Taster "D" betätigt wird (Übergang 26).

Im Display 2 der Eingabevorrichtung 1 wird der Tempomat-Modus durch die Darstellung eines Buchstabens "C" ("cruise control") anstelle der eingestellten Gangstufe angezeigt. Daneben bleibt weiterhin die Anzeige "AUTO" erhalten, welche darauf hinweist, dass eine automatische Steuerung der Gangstufen aktiv ist.

Im Tempomat-Modus (Zustand TM) sind die folgenden Tastenbetätigungen möglich:
- Drücken des Inkrementierungs-Tasters (+), was eine Erhöhung 24 der Sollgeschwindigkeit für den Tempomaten um eine vorgegebene Größe, zum Beispiel 5 km/h, oder um einen vorgegebenen Prozentsatz, zum Beispiel 5%, bewirkt;
- Drücken des Dekrementierungs-Tasters 5, was eine Verringerung der Sollgeschwindigkeit 25 für den Tempomaten um eine vorgegebene Größe, zum Beispiel 5 km/h, oder um einen vorgegebenen Prozentsatz, zum Beispiel 5%, bewirkt;
- Drücken des Neutralpositions-Tasters "N", was einen Übergang 20 in die Neutralposition des Getriebes und ein Verlassen des Tempomat-Modus unter Rücksprung in den Getriebe-Modus bewirkt;
- Drücken des Rückwärtsfahrt-Tasters "R", was keine Auswirkungen hat (Übergang 21); alternativ kann über die Betätigung dieses Tasters auch die Aktivität des Tempomaten ein- oder ausgeschaltet werden;
- Drücken des vorwärtsfahrt-Tasters "D", was ein Verlassen des Tempomat-Modus und eine Rückkehr 27 in den Getriebe-Modus im Zustand "ASM" bewirkt.

Des weiteren werden Betätigungen des Gaspedals 7 bzw. 8 und des Bremspedals 6 im Tempomat-Modus bei der Steuerung berücksichtigt. So bewirkt ein Drücken 22 des Gaspedals 7 eine zusätzliche Beschleunigung 11, während ein Loslassen des Gaspedals 8 ein Ende der Beschleunigung und eine Rückkehr zur Tempomat-Geschwindigkeit bewirkt. Durch die Betätigung des Gaspedals wird der Tempomat-Modus dabei nicht verlassen.

Wird dagegen die Bremse 6 im Tempomat-Modus betätigt, so findet ein Rücksprung 27 zum Getriebe-Modus im Zustand "ASM" statt.

Die erfindungsgemäße Steuereinrichtung ist nicht auf die in der Figur dargestellte Konfiguration der Bedienelemente beschränkt. Vielmehr kann sie bei verschiedenen Ausgestaltungen der Benutzerschnittstellen vorteilhaft eingesetzt werden, wie zum Beispiel auch bei Benutzerschnittstellen mit Schalthebeln als Bedienelementen.

## Patentansprüche

1. Steuereinrichtung für den Verbrennungsmotor und das automatische Getriebe eines Kraftfahrzeugs, enthaltend einen Tempomaten sowie eine Eingabevorrichtung mit Bedienelementen, welche im Getriebe-Modus der Eingabevorrichtung eine Eingabe von Befehlen an die Getriebesteuerung erlauben,
**dadurch gekennzeichnet, dass**
die Eingabevorrichtung (1) einen Tempomat-Modus (TM) annehmen kann, in welchem die Betätigung mindestens eines der Bedienelemente (R, N, D, 4, 5) nicht mehr als Befehl für die Getriebesteuerung, sondern als Befehl für den Tempomaten interpretiert wird, so dass dieses Bedienelement (R, N, D, 4, 5) die Eingabe von Befehlen an den Tempomaten erlaubt.

2. Steuereinrichtung nach Anspruch 1,
**dadurch gekennzeichnet, dass** die Bedienelemente einen Schalter für Vorwärtsfahrt (D) enthalten und dass die Eingabevorrichtung (1) so eingerichtet ist, dass sie durch Betätigung dieses Schalters (D) zwischen dem Getriebe-Modus in der Betriebsart "Vorwärtsfahrt" des automatischen Getriebes (ASM) und dem Tempomat-Modus (TM) umgeschaltet werden kann.

3. Steuereinrichtung nach einem der Ansprüche 1 oder 2,
**dadurch gekennzeichnet, dass** die Bedienelemente Eingabemittel (4, 5) zur Größeneinstellung aufweisen, deren Betätigung im Getriebe-Modus (ASM, SSM) der Eingabevorrichtung (1) einen Gangwechsel und im Tempomat-Modus (TM) der Eingabevorrichtung (1) eine Veränderung der Sollgeschwindigkeit bewirkt.

4. Steuereinrichtung nach mindestens einem der Ansprüche 1 bis 3,
**dadurch gekennzeichnet, dass** die Eingabevorrichtung (1) bei Betätigung der Fahrzeugbremse (6) vom Tempomat-Modus (TM) in den Getriebe-Modus (ASM) übergeht.

5. Steuereinrichtung nach mindestens einem der Ansprüche 1 bis 4,
**dadurch gekennzeichnet, dass** die Bedienelemente Schalter für Rückwärtsfahrt (R) und für die Neutralposition (N) des Getriebes enthalten, wobei im Tempomat-Modus (TM) die Betätigung des Schalters für Rückwärtsfahrt (R) keine Auswirkung hat.

6. Steuereinrichtung nach mindestens einem der Ansprüche 1 bis 5,
**dadurch gekennzeichnet, dass** sie eine Anzeigevorrichtung (2) enthält, auf der ein Hinweis ("C") auf den Tempomat-Modus (TM) dargestellt wird, wenn sich die Eingabevorrichtung (1) hierin befindet.

## Claims

1. Control device for the internal combustion engine and the automatic gearbox of a motor vehicle, including a tempomat and an input device with operating elements which permit commands to be input to the gearbox controller in the gearbox mode of the input device, wherein the input device (1) can adopt a tempomat mode (TM) in which the actuation of at least one of the operating elements (R, N, D, 4, 5) is interpreted no longer as a command for the gearbox controller, but as a command for the tempomat such that this operating element (R, N, D, 4, 5) permits commands to be input to the tempomat.

2. Control device according to Claim 1, **characterized in that** the operating elements include a switch for forward driving (D), and **in that** the input device (1) is set up such that it can be switched over between the gearbox mode in the "forward driving" operating state of the automatic gearbox (ASM) and the tempomat mode (TM) by actuating this switch (D).

3. Control device according to one of Claims 1 or 2, **characterized in that** the operating elements have input means (4, 5) for setting variables, the actuation of which in the gearbox mode (ASM, SSM) of the input device (1) effects a gear shift, and in the tempomat mode (TM) of the input device (1) effects a change in the desired speed.

4. Control device according to at least one of Claims 1 to 3, **characterized in that** the input device (1) goes over from the tempomat mode (TM) into the gearbox mode (ASM) upon actuation of the vehicle brake (6).

5. Control device according to at least one of Claims 1 to 4, **characterized in that** the operating elements include switches for rearward driving (R) and for the neutral position (N) of the gearbox, the actuation of the switch for rearward driving (R) having no effect in the tempomat mode (TM).

6. Control device according to at least one of Claims 1 to 5, **characterized in that** it includes a display device (2) on which an indication ("C") of the tempomat mode (TM) is displayed when the input device (1) is **in that** mode.

## Revendications

1. Dispositif de commande pour le moteur à combustion interne et la boîte de vitesses automatique d'un véhicule automobile, comportant un régulateur de vitesse ainsi qu'un dispositif d'introduction pourvu d'éléments de commande, lesquels permettent une introduction d'instructions à la commande de boîte de vitesses en mode boîte de vitesses du dispositif d'introduction, **caractérisé en ce que** le dispositif d'introduction (1) peut adopter un mode régulateur de vitesse (TM), dans lequel l'actionnement d'au moins l'un des éléments de commande (R, N, D, 4, 5) n'est plus interprété en tant qu'instruction pour la commande de boîte de vitesses, mais en tant qu'instruction pour le régulateur de vitesse, de sorte que ledit élément de commande (R, N, D, 4, 5) autorise l'introduction d'instructions au régulateur de vitesse.

2. Dispositif de commande selon la revendication 1, **caractérisé en ce que** les éléments de commande comportent un commutateur pour la marche avant (D) et **en ce que** le dispositif d'introduction (1) est configuré de telle sorte qu'il puisse être commuté, par actionnement dudit commutateur (D), entre le mode boîte de vitesses en mode de fonctionnement "marche avant" de la boîte de vitesses automatique (ASM) et le mode régulateur de vitesse (TM).

3. Dispositif de commande selon l'une des revendications 1 ou 2, **caractérisé en ce que** les éléments de commande présentent des moyens d'introduction (4, 5) pour le réglage de grandeurs, dont l'actionnement en mode boîte de vitesses (ASM, SSM) du dispositif d'introduction (1) provoque un changement de rapport et en mode régulateur de vitesse (TM) du dispositif d'introduction (1) un changement de la vitesse théorique.

4. Dispositif de commande selon au moins l'une quelconque des revendications 1 à 3, **caractérisé en ce que** le dispositif d'introduction (1) passe du mode régulateur de vitesse (TM) en mode boîte de vitesses (ASM) lors de l'actionnement de la pédale de frein (6) du véhicule.

5. Dispositif de commande selon au moins l'une quelconque des revendications 1 à 4, **caractérisé en ce que** les éléments de commande comportent des commutateurs pour la marche arrière (R) et pour la position neutre (N) de la boîte de vitesses, l'actionnement du commutateur pour la marche arrière (R) n'ayant aucun effet en mode régulateur de vitesse (TM).

6. Dispositif de commande selon au moins l'une quelconque des revendications 1 à 5, **caractérisé en ce qu'**il comporte un dispositif d'affichage (2), sur lequel une indication ("C") relative au mode régulateur de vitesse (TM) est représentée lorsque le dispositif d'introduction (1) se trouve dans ledit mode.
